Europäisches Patentamt

European Patent Office

Office européen des brevets

(11) Numéro de publication: **0 290 364**
**A1**

## (12) DEMANDE DE BREVET EUROPEEN

(21) Numéro de dépôt: **88450017.4**

(22) Date de dépôt: **26.04.88**

(51) Int. Cl.⁴: **G 09 B 9/04**
**G 09 B 5/14**

(30) Priorité: **29.04.87 FR 8706432**

(43) Date de publication de la demande:
**09.11.88 Bulletin 88/45**

(84) Etats contractants désignés:
**AT BE CH DE ES FR GB GR IT LI LU NL SE**

(71) Demandeur: **SARL FRANCE PILOTAGE SYSTEMES**
**Route de Marquixanes**
**F-66500 Prades (FR)**

(72) Inventeur: **Baque, Jean Claude**
**Villa Le Close**
**F-66120 Font Romeu (FR)**

**Adt, Francis**
**F-66240 Saint Estève (FR)**

(74) Mandataire: **Ravina, Bernard**
**Cabinet Bernard RAVINA 24, boulevard Riquet**
**F-31000 Toulouse (FR)**

(54) **Installation pour l'apprentissage de la conduite automobile.**

(57) La présente invention à pour objet une installation pour l'apprentissage de la conduite automobile.

L'installation est remarquable notamment en ce qu'elle comprend une piste routière (1) au moins un véhicule (2) destiné à être conduit sur la dite piste par un élève conducteur, au moins un poste de surveillance (3) disposé en surélévation par rapport à la dite piste, le dit poste étant destiné à être occupé par un moniteur. L'installation comprend également un ensemble de télécommande sélective par voie hertzième agissant sur des moyens assurant une liaison vidéo entre un véhicule et le poste de surveillance, et/ou sur des moyens assurant au moins une liaison radiophonique entre un véhicule et le poste de surveillance et réciproquement et/ou sur des servo mécanismes équipant chacun un véhicule et connectés chacun à la pédale des freins de ce véhicule.

Fig.1

EP 0 290 364 A1

Bundesdruckerei Berlin

**Description**

### INSTALLATION POUR L'APPRENTISSAGE DE LA CONDUITE AUTOMOBILE.

La présente invention a pour objet une installation pour l'apprentissage de la conduite automobile.

Dans le cadre de l'apprentissage de la conduite automobile il est connu d'utiliser des parcours routiers uniquement réservés à la circulation des véhicules écoles. Sur de tels parcours les élèves peuvent acquérir en toute sécurité les premiers gestes et automatismes de la conduite automobiles.

Ce mode d'apprentissage requiert la présence dans le véhicule d'un moniteur qui corrige les gestes de l'élève et agit sur les commandes du véhicule notamment les freins si nécessaire. La présence d'un moniteur dans chaque véhicule qui évolue sur le parcours routier se révèle coûteuse.

La présente invention a pour objet de pallier à l'inconvénient précédent énoncé en mattant en oeuvre un ensemble grâce auquel un seul moniteur peut surveiller la conduite de plusieurs élèves et agir sélectivement à distance sur le véhicule de chacun d'entre eux.

A cet effet l'installation selon la présente invention se caractérise essentiellement en ce qu'elle comprend en combinaison:
- une piste routière,
- au moins un véhicule destiné à être conduit sur la dite piste par un élève conducteur
- au moins un poste de surveillance disposé en surélévation par rapport à la dite piste, le dit poste étant destiné à être occupé par un moniteur,
- et un ensemble de télécommande sélective par voie hertzième agissant sur des moyens assurant une liaison vidéo entre un véhicule à la fois et le poste de surveillance, et/ou sur des moyens assurant au moins une liaison radiophonique entre un véhicule et le poste de surveillance et réciproquement et/ou sur des servo mécanismes équipant chacun un véhicule et connectés chacun à la pédale des freins de ce véhicule.

Selon une autre caractéristique de l'invention, les moyens assurant une liaison vidéo entre les véhicules et le poste de surveillance sont constitués par plusieurs caméras vidéo (4) chacune installées dans un véhicule (2) associées chacune à un émetteur vidéo (5) qui émet suivant une fréquence qui lui est propre et par plusieurs récepteurs vidéo (6) installés dans le poste de surveillance (3) les dits récepteurs (6)) étant accordés sur la fréquence d'au moins un émetteur vidéo (5).

Selon une autre caractéristique de l'invention, les moyens assurant une liaison radiophonique entre au moins un véhicule (2) et le poste de surveillance (3) sont constitués par plusieurs émetteurs (7) avec microphone (7A) installés dans le véhicule, par au moins un récepteur (8) avec haut parleur (8A) accordé sur la fréquence des émetteurs (7) installé dans le poste de surveillance (3), par au moins un émetteur (9) avec microphone (9A) installé dans le poste de surveillance et par plusieurs récepteurs 10 avec haut parleurs 10A installés chacun dans un véhicule et accordés chacun sur la fréquence de l'émetteur (9).

Selon une autre caractéristique de l'invention la caméra vidéo est placée en arrière du conducteur de façon à filmer ses gestes de dos.

Ainsi le moniteur placé dans le poste de surveillance peut observer par l'intermédiaire du récepteur vidéo les gestes de la conduite de l'élève, lui prodiguer les conseils nécessaires et agir sur le circuit de freinage du véhicule.

D'autres avantages et caractéristiques de l'invention apparaitront à la lecture de la description d'une forme préférentielle de réalisation, donnée à titre d'exemple non limitatif en se référant aux dessins annexés en lesquels:

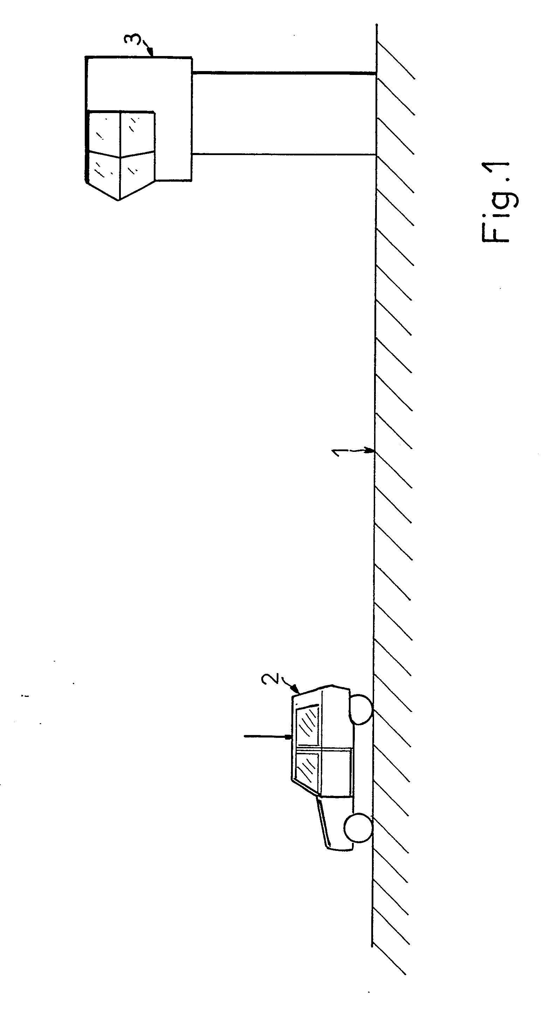

- la figure 1 est une vue en perspective de manière schématique d'une installation conforme à l'invention,

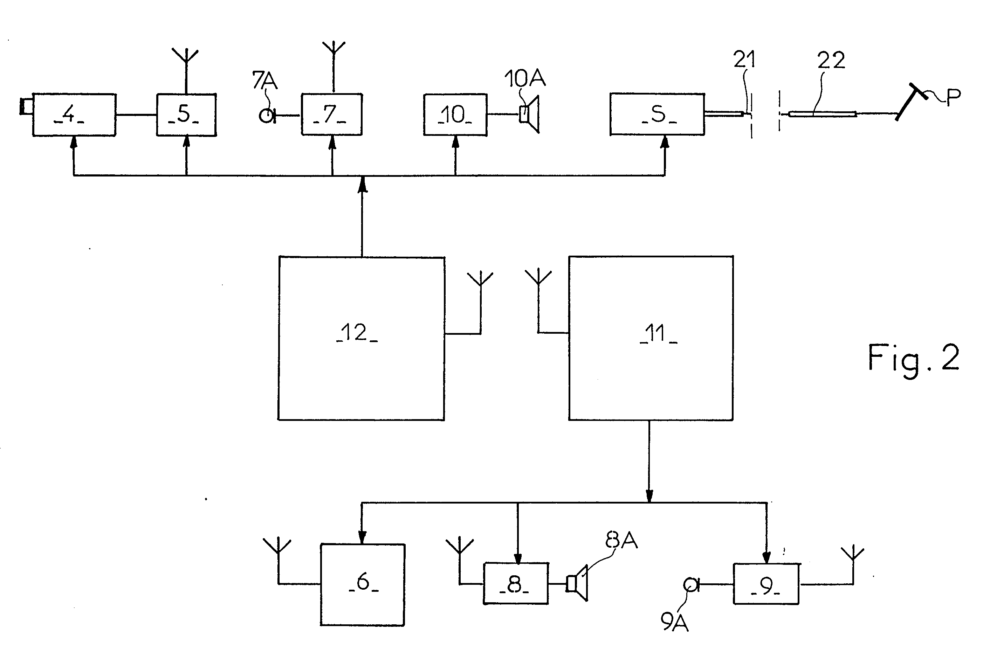

- la figure 2 est une vue synoptique illustrant l'ensemble de télécommande et les moyens de liaison vidéo, et de liaison radio phonique,

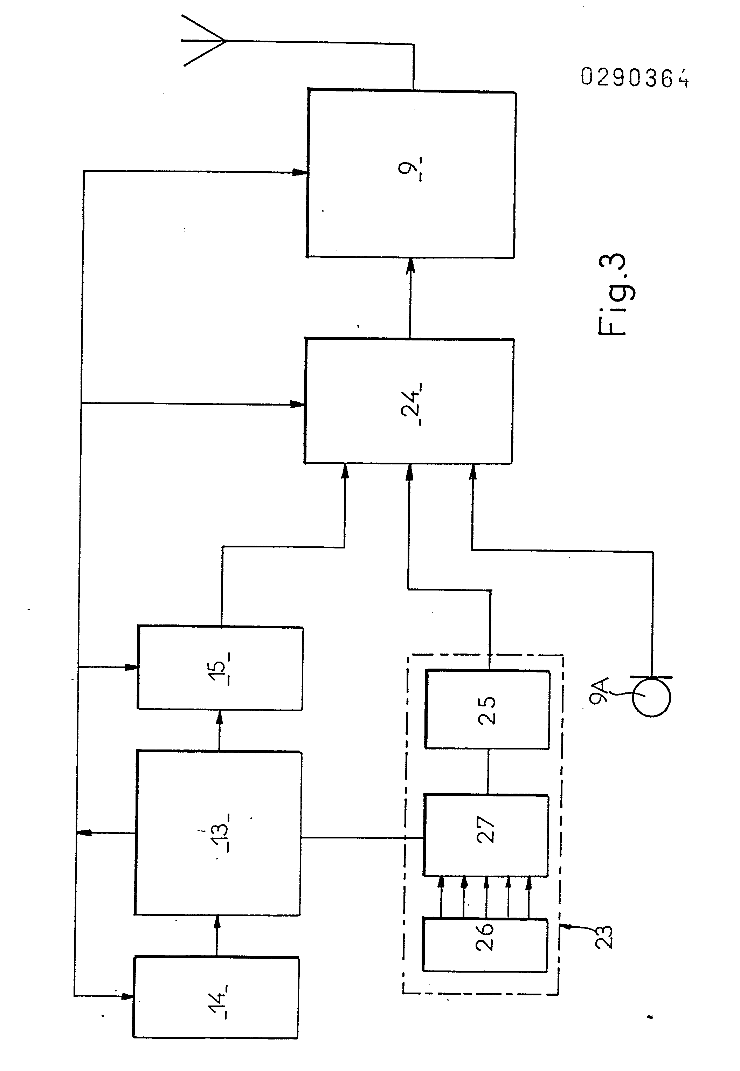

- la figure 3 est une vue synoptique illustrant l'unité d'émission,

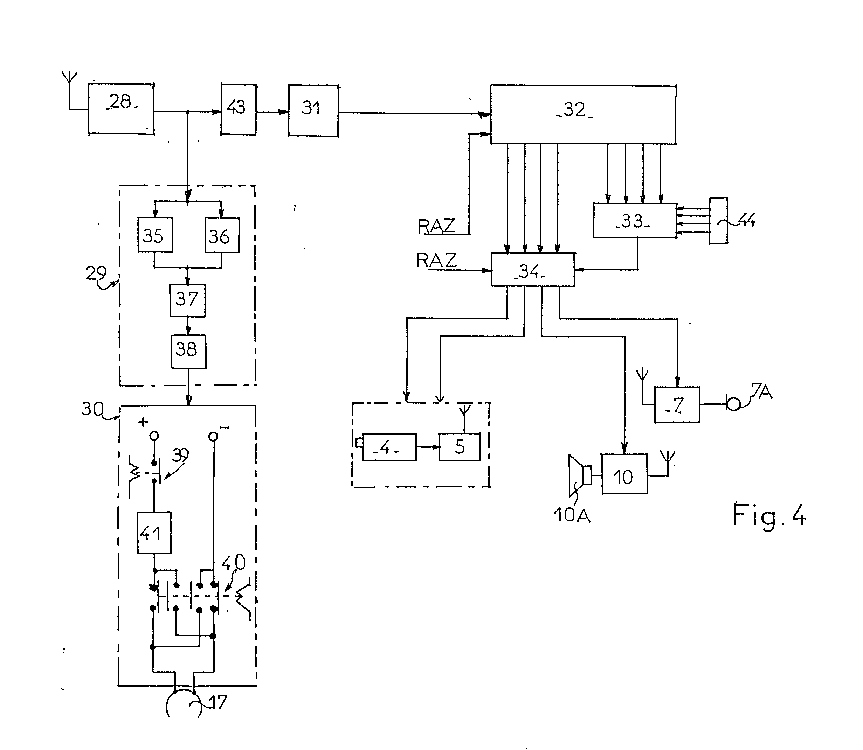

- la figure 4 est une vue synoptique illustrant une unité de réception,

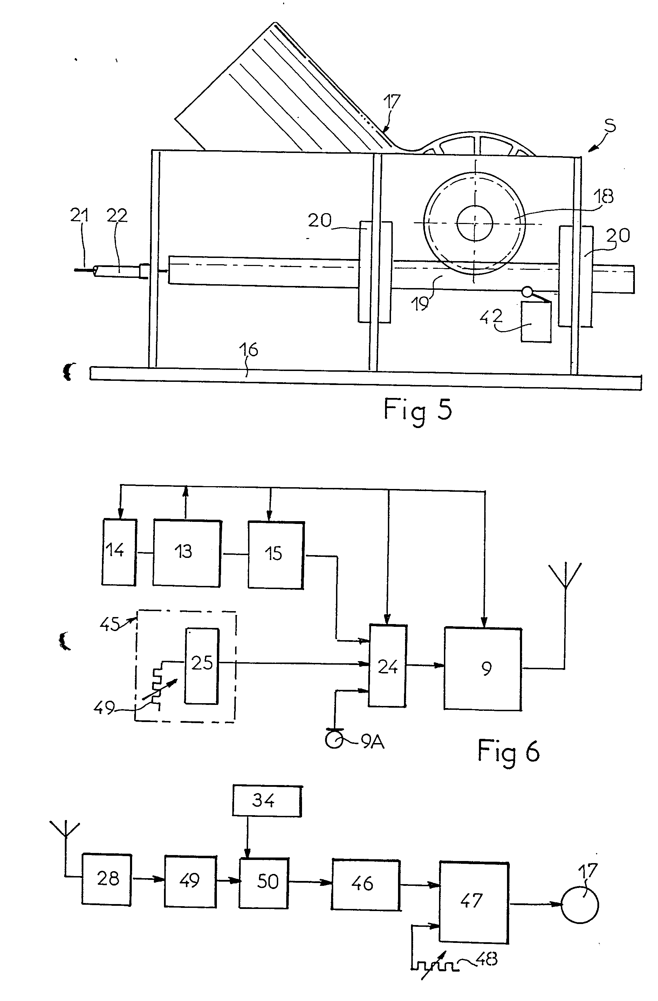

- la figure 5 est une vue de face sous forme de schéma d'un servo mécanisme,
- la figure 6 est une vue synoptique d'une forme de réalisation des moyens assurant la commande proportionnelle des freins.

Telle que représentée, l'installation selon l'invention pour l'apprentissage de la conduite automobile comprend une piste routière (1) sur laquelle évolue au moins un véhicule 2 conduit par un élève conducteur sous la surveillance d'un moniteur placé dans un poste de surveillance 3 surélevé par rapport à la piste. Ce poste est situé en bordure de piste.

L'installation selon l'invention est également équipée d'un ensemble de télécommande sélective par voie hertzienne agissant sur des moyens assurant une liaison vidéo entre un véhicule à la fois et le poste de surveillance afin de permettre la visualisation de la conduite de l'élève, et/ou sur des moyens assurant une liaison radiophonique entre au moins un véhicule et le poste de surveillance et réciproquement de façon à ce que l'élève et le moniteur puissent dialoguer ensemble et/ou sur des servo mécanismes S équipant chacun un véhicule et connecté chacun mécaniquement à la pédale P des freins de ce véhicule.

Le moniteur par l'intermédiaire de l'ensemble de télécommande peut sélectionner un véhicule et établir avec ce dernier les liaisons précitées, et agir si nécessaire sur le circuit de freinage du véhicule.

L'ensemble des moyens de liaison vidéo entre le véhicule et le poste de surveillance est constitué par plusieurs caméras vidéo 4 chacune installée dans un véhicule 2 associée chacune à un émetteur vidéo 5 qui émet suivant une fréquence qui leur est propre, et par plusieurs récepteurs vidéo 6 installés dans le poste de surveillance 3 les dits récepteurs 6 étant accordés sur la fréquence d'au moins un émetteur vidéo 5.

Selon la forme préférée de réalisation la caméra vidéo est installée dans l'habitacle du véhicule en arrière des sièges avant du véhicule et filme les gestes du conducteur.

Les moyens assurant une liaison radiophonique entre le véhicule et le poste de surveillance et entre ce poste et le véhicule sont constitués par plusieurs émetteurs 7 avec microphones 7A chacun installé dans un véhicule par au moins un récepteur 8 avec haut parleur 8A accordé sur la fréquence des émetteurs, installé dans le poste de surveillance 3 par au moins un émetteur 9 avec microphone 9A installé dans le poste de surveillance et par plusieurs récepteurs 10 avec haut parleur 10A installés chacun dans un véhicule et accordés chacun sur la fréquence de l'émetteur 9.

Selon la forme préférée réalisation chaque caméra vidéo et émetteur vidéo associé sont du type comportant une voie son et comportent de ce fait un émetteur radio qui constitue avantageusement l'émetteur 7.

Le servo mécanisme S est constitué par un bati 16 sur lequel est monté un moto-reducteur électrique 17 sur l'arbre de sortie duquel est calé un pignon denté 18 qui s'engrenne avec une crémaillère 19 montée de manière mobile en translation dans deux portées de guidage 20 fixées toutes deux au bâti. A cette crémaillère est fixé l'extrémité d'un cable de traction 21 dont l'autre extrémité est fixée par tous moyens connus à la pédale P du frein. Avantageusement le cable coulisse dans une gaine 22. La rotation de l'arbre de sortie du moteur provoque la translation de la crémaillère et donc l'actionnement de la pédale de frein.

Selon la forme préférée de réalisation le modulateur de l'unité d'émission est constitué par un modem qui transforme le code binaire délivré en mode série par l'unité 13 en train d'ondes basse fréquence qui est ensuite appliqué à l'entrée basse fréquence de l'émetteur VHF 9.

Selon une première forme de réalisation, les codes représentatifs d'un ordre de freinage ne sont pas délivrés à l'organe de modulation mais à un convertisseur 23 qui les convertit en signaux basse fréquence dont la fréquence est représentative du ou des véhicules à freiner.

Ce signal de forme sinusoïdale est appliqué à l'entrée basse fréquence de l'émetteur VHF de façon à moduler la porteuse émise par le dit émetteur.

De cette manière les signaux d'ordre de freinage au niveau des unités de réception (12) ne requièrent aucun décodage et de ce fait peuvent être exécutés de manière plus rapide.

Selon cette forme de réalisation l'unité d'émission comporte un multiplexeur 24 dont la sortie est connecté à l'entrée basse fréquence de l'émetteur VHF et dont deux entrées sont respectivement connectées à la sortie du modulateur 15 et à la sortie du convertisseur 23.

Ce multiplexeur est commandé par l'unité de codage et de commande.

Cette unité en fonction des ordres de télécommande qu'elle délivre commute la sortie du multiplexeur soit avec l'entrée de ce multiplexeur associée au modulateur soit avec l'entrée de ce multiplexeur associée au convertisseur.

Selon une forme préférée de réalisation le convertisseur 23 est constitué par un oscillateur 25 commandé en tension susceptible d'engendrer au moins autant de signaux de fréquences différentes qu'il y a de véhicules, par un générateur de tension 26 délivrant simultanément plusieurs niveaux de tension calibrés chacun sur une de ses sorties, chaque niveau correspondant à une fréquence à engendrer et un multiplexeur 27 dont chaque entrée est connectée à une sortie du générateur de tension et à une seule et dont la sortie est connectée à l'entrée de l'oscillateur.

Ce multiplexeur 27 est commandé par l'unité de codage et de commande 13 et reçoit de cette dernière le code correspondant à l'ordre de freinage.

Ce code pourra être appliqué sur les entrées commande de ce multiplexeur 27 et en fonction de l'état logique de ces entrées la sélection du niveau de tension correspondant à ce code sera opérée afin que l'oscillateur 25 puisse engendrer un signal de fréquence correspondante à ce code.

Préférentiellement à un des ordres de freinage correspond un ordre de freinage général afin de freiner simultanément tous les véhicules.

Ainsi une des sorties du générateur de tension délivrera un niveau de tension correspondant à un signal basse fréquence qui sera compris comme ordre de freinage par toutes les unités de réception (12).

Il est à noter que les fréquences des signaux d'ordres de freinage sont différentes des fréquences des signaux générés par le modem.

Comme dit précédemment à l'émetteur VHF 9 est associé un microphone 9A.

Selon la forme préférée de réalisation ce microphone 9A est connecté à l'émetteur 9 par l'intermédiaire du multiplexeur 24 qui comporte à cet effet une troisième entrée dont la commutation avec la sortie et donc l'entrée basse fréquence de l'émetteur est commandée par l'unité de codage et commande 13 lorsque la touche correspondante du clavier est actionnée. Cette dernière est actionnée par le moniteur lorsqu'il souhaite dialoguer avec le conducteur de véhicule sélectionné.

Selon une autre forme de réalisation, les codes représentatifs d'un ordre de freinage sont directement délivrés à l'organe de modulation, l'unité d'émission, selon cette forme de réalisation ne comportant plus de convertisseur 23.

Selon une première forme de réalisation chaque unité de réception 21 comprend :
- une alimentation à découpage,
- un récepteur VHF 28 calé sur la fréquence d'émission de l'émetteur 9 de l'unité d'émission,
- un circuit 29 de réception des signaux représentatifs des ordres de freinage connecté à la sortie basse fréquence du récepteur VHF,
- une interface de puissance 30 connectée à la sortie du circuit de réception d'ordre de freinage à la sortie de laquelle est connecté électriquement le moto réducteur (17) du mécanisme de servo commande

- un démodulateur 31 connecté à la sortie basse fréquence du récepteur VHF 28 qui convertit en signaux binaires série les signaux reçus sous forme de train d'ondes basse fréquence délivrés par le récepteur VHF, ces signaux étant autres que ceux représentatif des ordres de freinage,
- un circuit universel asynchrone d'émission réception 32 UART connecté à la sortie du démodulateur pour transformer les signaux binaires série en signaux binaires parallèles,
- un circuit 33 de décodage du signal binaire délivrés par l'UART correspondant au code voiture,
- un ou plusieurs circuits 34 de décodage des signaux binaires toujours délivrés par l'UART, correspondants aux ordres de télécommande, lesquels circuits sont associés aux moyens de liaison vidéo et liaison radiophonique.

De préférence, le circuit 29 de réception des signaux représentatifs des ordres de freinage comprend essentiellement un premier filtre 35 qui ne laisse passer que la fréquence de freinage propre au véhicule et au second filtre 36 qui ne laisse passer que la fréquence représentative de l'ordre de freinage général.

A ces deux filtres est associé un circuit temporisateur 37 à la sortie duquel est disposé un convertisseur fréquence tension 38 qui est connecté électriquement à l'interface 30 de puissance. Le circuit temporisateur 37 ne transmet au convertisseur fréquence/ tension que des signaux dont la durée est supérieure à une valeur prédéterminée.

De cette façon des signaux parasites correspondant à la fréquence des filtres ne pourront provoquer un freinage du véhicule.

L'interface de puissance 30 est équipée d'un relais 39 de puis sance connecté électriquement aux bornes d'alimentation du moteur électrique 17 et d'un relais inverseur 40 pour inverser la polarité de la tension d'alimentation du moteur électrique 17, ces deux relais étant placés sur le circuit d'alimentation du dit moteur.

Avantageusement le circuit d'alimentation du moteur comporte un moyen de détection 41 d'une surintensité du courant d'alimentation du moto réducteur.

Une surintensité est provoquée lorsque le rotor du moteur est bloqué en rotation. Ce blocage en rotation résulte notamment du blocage en translation de la crémaillère 19 lorsque le cable 21 qu'elle actionne est complètement tendu et que la pédale de frein est en bout de sa course de freinage.

Lorsqu'une surintensité est détectée, le moyen de détection 41 provoque la coupure de l'alimentation du moto réducteur et en variante commande également l'ouverure du circuit d'allumage du moteur du véhicule en provoquant par exemple le basculement d'un organe interrupteur placé en série sur le dit circuit.

Lors de l'actionnement de la clé du contact du véhicule dans le sens d'une remise en marche du moteur, un contact sera actionné lequel par l'intermédiaire d'un circuit d'automatisme provoquera dans un premier temps le basculement du relais 40 inverseur de polarité et dans un second temps la fermeture du circuit d'alimentation du moto-réducteur. Le rotor du moto réducteur tournera en sens inverse ce qui provoquera le retour de la crémaillère 19 et donc le relachement de la pédale de frein. La fin de course retour de la crémaillère 19 sera détectée par un capteur de fin de course 42 qui provoquera toujours par l'intermédiaire d'un circuit d'automatisme le basculement du relais inverseur 40 et l'ouverture du circuit d'alimentation.

Comme dit précédemment à la sortie basse fréquence du récepteur 28 est connecté le démodulateur 31.

Afin que le fonctionnement de ce démodulateur ne soit pas perturbé, soit par des signaux parasites basses fréquences, soit par les signaux basse fréquences représentatifs des ordres de freinage, il peut être disposé à l'entrée du dit modulateur un dispositif de filtrage 43 qui ne laisse passer que les signaux représentatifs du véhicule sélectionné et des ordres de télécommande. Le démodulateur est par exemple constitué par un modem.

Le circuit asynchrone d'émission réception 32 délivre sur sa sortie un mot binaire de huit bits composé de l'assemblage d'un premier code sur quatre bits représentatifs du véhicule sélectionné et d'un second code binaire sur quatre bits représentatif de la fonction de télécommande à exécuter.

A titre d'exemple les quatre bits de poids faible constituent le code du véhicule tandis que les 4 bits de poids forts constituent le code représentatif de la fonction de télécommande à exécuter.

Les quatres bits de poids faible sont appliqués au premier circuit de décodage 33 tandis que le bits de poids forts sont appliqués sur le décodeur d'ordre de télécommande ou second décodeur lequel est validé par le premier.

Le premier décodeur 33 est constitué essentiellement par un com parateur qui compare le code reçu à un code inscrit en mémoire 44 lequel est représentatif du véhicule.

Si les deux codes sont identiques, le premier décodeur émettra en direction du second décodeur un signal de validation de façon à ce que la fonction de télécommande puisse être décodée par ce dernier et exécutée.

Selon la forme préférée de réalisation le second décodeur est constitué par un convertisseur binaire/ numérique à quatre sorties comportant des registres mémoires dans lesquels est inscrit le code représentatif de la fonction de télécommande à exécuter. Les quatres sorties de ce décodeur sont connectées aux organes des moyens de liaison vidéo et de liaison radio du véhicule.

Selon une autre forme de réalisation l'installation est dotée de moyens pour assurer un freinage progressif du véhicule.

Selon cette forme de réalisation l'unité d'émission pourra être équipée d'un générateur 45 susceptible de générer un signal basse fréquence dont la fréquence, ajustable par le moniteur, est représentative de l'intensité de freinage désirée.

Ce signal sera ensuite appliqué à l'entrée basse fréquence de l'émetteur 9 après que l'unité 11 ait émis un code représentatif du véhicule à freiner et de la fonction de télécommande frein à réaliser ces deux codes étant délivrés par l'unité 11.

L'unité de réception pourra comporter un convertisseur fréquence/tension 46 pour transformer le signal reçu, représentatif de l'intensité de freinage en une tension continue représentative de l'intensité de freinage désirée.

Cette tension sera comparée par un comparateur 47 à fenêtre à une tension continue délivrée par un potentiomètre 48 dont l'élément mobile pourra être couplé mécaniquement à l'arbre de sortie de l'organe moteur par exemple. Ce comparateur en fonction du résultat de la comparaison, commandera la rotation du moteur dans un sens ou dans l'autre.

Selon cette forme de réalisation, en amont du circuit du convertisseur fréquence/tension 46 est disposée une porte 49.
Cette porte 49 reçoit de la sortie d'un filtre passe bande 50 connecté à la sortie basse fréquence du recepteur, un signal basse fréquence et délivre ce signal basse fréquence au convertisseur 46 si elle a reçu du décodeur 34 un signal de validation.

Selon la forme préférée de réalisation le générateur 45 pourra être constitué par l'oscillateur commandé en tension 25 et par un potentiomètre 49 manoeuvrable par le moniteur.
Ce potentiomètre 49 appliquera une tension sur l'entrée de l'oscillateur.

Avantageusement l'absence de réception de l'onde porteuse par le récepteur VHF provoque par tous circuits adaptés, l'émission d'un signal de remise à zéro des registres mémoires du second décodeur et des registres mémoires de l'UART.
L'émission de l'onde porteuse est volontairement interrompue après chaque envoi des signaux.

Selon une autre forme de réalisation, l'unité de réception est batie autour d'un micro-processeur par exemple un 6809 et comprend un VIA par exemple un 6522 en amont duquel est disposé le démodulateur.
Ce circuit VIA est doté d'un coupleur parallèle par l'intermédiaire duquel sont commandés les divers servo-mécanismes y compris celui du frein.

Il va de soi que la présente invention peut recevoir tous aménagements et toutes variantes dans le domaine des équivalents techniques sans pour autant sortir du cadre du présent brevet.

**Revendications**

1. Installation pour l'apprentissage de la conduite automobile caractérisée en ce qu'elle comprend en combinaison:
- une piste routière (1)
- au moins un véhicule (2) destiné à être conduit sur la dite piste par un élève conducteur,
- au moins un poste de surveillance (3) disposé en surélévation par rapport à la dite piste, le dit poste étant destiné à être occupé par un moniteur,
- et un ensemble de télécommande sélective par voie hertzième agissant sur des moyens assurant une liaison vidéo entre un véhicule et le poste de surveillance, et/ou sur des moyens assurant une liaison radiophonique entre un véhicule et le poste de surveillance et réciproquement et/ou sur des servo mécanismes (S) équipant chacun un véhicule et connectés chacun à la pédale (P) des freins de ce véhicule.

2. Installation selon la revendication I caractérisée en ce que les moyens assurant une liaison vidéo entre les véhicules et le poste de surveillance sont constitués par plusieurs caméras vidéo (4) chacune installées dans un véhicule (2) associées chacune à un émetteur vidéo (5) qui émet suivant une fréquence qui lui est propre et par plusieurs récepteurs vidéo (6) installés dans le poste de surveillance (3), les dits récepteurs (6)) étant accordés sur la fréquence d'au moins un émetteur vidéo (5).

3. Installation selon la revendication I caractérisée en ce que chaque caméra vidéo est installée dans un véhicule, en arrière des sièges avant de façon à filmer les gestes du conducteur.

4. Installation selon la revendication I caractérisée en ce que les moyens assurant une liaison radiophonique entre au moins un véhicule (2) et le poste de surveillance (3) sont constitués par plusieurs émetteurs (7) avec microphone (7A) installés dans le véhicule, par au moins un récepteur (8) avec haut parleur (8A) accordé sur la fréquence des émetteurs (7), installé dans le poste de surveillance (3), par au moins un émetteur (9) avec microphone (9A) installé dans le poste de surveillance et par plusieurs récepteurs 10 avec haut parleurs 10A installés chacun dans un véhicule et accordés chacun sur la fréquence de l'émetteur (9).

5. Installation selon la revendication I caractérisé en ce que le mécanisme de servo commande est constitué par un bâti (16) sur lequel est monté un moto réducteur (17) sur l'arbre de sortie duquel est calé un pignon denté (18) qui s'engrène avec une crémaillère (19) montée de manière mobile en translation dans deux portées (20) de guidage fixées toutes deux au bâti, à la dite crémaillère étant fixé l'extrémité d'un cable de traction dont l'autre extrémité est fixée à la pédale de frein le dit cable étant placé dans une gaine (22) dans lequel il coulisse.

6. Installation selon la revendication I caractérisée en ce que l'ensemble de télécommande comprend :
une unité d'émission (11) installée dans le poste de surveillance (3) par laquelle sont émis des signaux de télécommandes codés représentatifs du véhicule sélectionné et/ou représentatif de la fonction de télécommande à exécuter par le moyen de liaison vidéo et/ou par le moyen de liaison radiophonique et/ou par le servo--mécanisme,
- plusieurs unités de réception (12) installées chacune dans un véhicule lesquelles reçoivent les signaux émis par l'unité d'émission (11), les décodent et agissent sur les moyens correspondants si les signaux reçus sont destinés au véhicule que chacune d'entre elles équipe.

7. Installation selon la revendication 6 caractérisée en ce que l'unité d'émission (11) est constituée par :

- une unité de commande et de codage (13) qui code en binaire les informations qu'elle reçoit d'un clavier (14) qui lui est associé, lesquelles informations sont représentatives du véhicule à sélectionner et/ou de la fonction de télécommande à exécuter,

- un organe de modulation (15) qui transforme les codes binaires reçus de l'unité de commande en ondes basse fréquence,

- un émetteur VHF sur l'entrée basse fréquence duquel sont appliquées les ondes basses fréquences afin de moduler la porteuse émise par cet émetteur.

8. Installation selon les revendications 4 et 6 caractérisée en ce que l'émetteur VHF de l'unité d'émission (11) est constitué par l'émetteur (9).

9. Installation selon les revendications 6 et 7 caractérisée en ce que l'unité (11) est dotée d'un convertisseur (23) et que les codes digitaux élaborés par l'unité (13) représentatifs d'un ordre de freinage sont appliqués à l'entrée de ce convertisseur qui les convertit en signaux basse fréquence dont la fréquence est représentative du ou des véhicule à freiner, le signal basse fréquence élaboré étant ensuite appliqué à l'entrée basse fréquence de l'émetteur (9).

10. Installation selon les revendications 4, 6 et 9 caractérisée en ce que l'unité d'émission (11) comporte un multiplexeur (24) dont la sortie est connectée à l'entrée basse fréquence de l'ématteur (9) et dont les trois entrées sont respectivement connectées à la sortie de l'organe de modulation (15) à la sortie du convertisseur (23) et au microphone (9A), le dit multiplexeur étant commandé par l'unité (13).

11. Installation selon la revendication 9 caractérisée en ce que un des signaux de freinage susceptible d'être élaboré par l'unité d'émission II correspond à un ordre de freinage général, afin de pouvoir freiner simultanément tous les véhicules.

12. Installation selon la revendication 6 caractérisée en ce que chaque unité de réception (12) comprend :

- un récepteur VHF (28) calé sur la fréquence d'émission de l'émetteur (9),

- un circuit (29) de réception des signaux représentatifs des ordres de freinage, connecté à la sortie basse fréquence du récepteur VHF,

- une interface (30) de puissance connectée à la sortie du circuit de réception (29), à la sortie de laquelle est connecté électriquement le moto réducteur (17) du mécanisme de servo commande,

- un démodulateur (31) connecté à la sortie basse fréquence du récepteur VHF (28) qui convertit en signaux binaire série les signaux basses fréquence reçus, délivrés par le récepteur VHF, lesquels sont autres que ceux représentatifs des ordres de freinage,

- un circuit universel asynchrone d'émission réception (32) connecté à la sortie du démodulateur (31) pour transformer les signaux binaires série en signaux binaires parallèles,

- un circuit (33) de décodage du signal binaire délivré par le circuit (32) correspondant au code du véhicule,

- un ou plusieurs circuits (34) de décodage des signaux binaires délivrés par le circuit (32) correspondant aux ordres de télécommande lesquels circuits sont associés au moyen liaison vidéo et aux moyens de liaison radiophoniques et sont validés par le circuit (33) si le code véhicule reçu correspond bien au véhicule.

13. Installation selon la revendication 12 caractérisé en ce que le circuit de réception des ordres de freinage comprend essentiellement:

- un premier filtre (35) qui ne laisse passer que la fréquence de freinage propre au véhicule,

- un second filtre (36) qui ne laisse passer que la fréquence représentative de l'ordre de freinage général,

- un circuit temporisateur 37 associé à ces deux filtres à la sortie duquel est disposé un circuit convertisseur fréquence tension (38) qui est connecté électriquement à l'interface 30.

14. Installation selon la revendication 12 caractérisée en ce que le décodeur (33) est constitué par un comparateur qui compare le code véhicule qu'il reçoit à celui inscrit en mémoire (44) lequel est représentatif du véhicule, et qui émet un signal de validation vers le second décodeur (34) si les deux codes sont identiques.

15. Installation selon la revendication 12 caractérisée en ce que le second décodeur (34) est constitué par un convertisseur binaire/numérique.

16. Installation selon les revendications 1, 5 et 6 prises en combinaison caractérisée en ce qu'elle est dotée de moyens assurant un freinage progressif du véhicule.

Fig.1

0290364

0290364

Fig.2

Fig.3

029036⁴

Fig. 4

0290364

Fig 5

Fig 6

Office européen
des brevets

**RAPPORT DE RECHERCHE EUROPEENNE**

Numero de la demande

EP   88 45 0017

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 128 842  (LONDON UNIVERSITY COLLEGE) <br> * Page 1, lignes 30-49,110-130; figures * <br><br> --- | 1,2,6 | G 09 B    9/04 <br> G 09 B    5/14 |
| A | PROCEEDINGS IECON '84, INTERNATIONAL CONFERENCE ON INDUSTRIAL ELECTRONICS, CONTROL AND INSTRUMENTATION, 22-26 octobre 1984, vol. 1, pages 318-323, IEEE, New York, US; S. TSUGAWA et al.: "Computer-aided instruction system of automobile driving" <br> --- | 1-16 | |
| A | FR-A-2 408 185  (SONY) <br> ----- | | |

|  | DOMAINES TECHNIQUES RECHERCHES (Int. Cl.4) |
|---|---|
|  | G 09 B |

Le présent rapport a été établi pour toutes les revendications

| Lieu de la recherche | Date d'achèvement de la recherche | Examinateur |
|---|---|---|
| LA HAYE | 24-06-1988 | ODGERS M.L. |

EPO FORM 1503 03.82 (P0402)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant